# EUROPÄISCHE PATENTSCHRIFT

(11) **EP 0 547 307 B1**
(45) Veröffentlichungstag und Bekanntmachung des Hinweises auf die Patenterteilung: **30.07.1997**
(21) Anmeldenummer: 92116606.2
(22) Anmeldetag: 29.09.1992
(51) Int. Cl.: F16D 35/00

(54) **Flüssigkeitsreibungskupplung**
Fluid friction clutch
Embrayage à friction de fluide

(30) Priorität: 19.12.1991 DE 4142013
(43) Veröffentlichungstag der Anmeldung: 23.06.1993
(73) Patentinhaber: Behr GmbH & Co., D-70469 Stuttgart (DE)
(72) Erfinder: Dax, Harald, Dipl.-Ing. FH, W-7000 Stuttgart 1 (DE)
(74) Vertreter: Heumann, Christian

(56) Entgegenhaltungen:
- DE-A- 1 425 244
- DE-A- 3 640 776
- US-A- 3 968 866

## Beschreibung

Die Erfindung betrifft eine Flüssigkeitsreibungskupplung nach dem Oberbegriff des Patentanspruches 1 - eine derartige Flüssigkeitsreibungskupplung wurde durch die EP - A 269 835 (DE - A 36 40 776) der Anmelderin bekannt.

Bei dieser vorbekannten Flüssigkeitsreibungskupplung ist zwischen der Nabe der Antriebsscheibe aus Aluminium und der Flanschwelle aus Stahl eine Kerbverzahnung vorgesehen, wobei die Flanschwelle eine Innenkerbverzahnung und die Nabe der Antriebsscheibe eine Außenkerbverzahnung aufweist, die durch spanende Verformung während der Montage erzeugt wird. Diese Welle-Nabe-Verbindung ist technisch durchaus befriedigend, allerdings ist die Herstellung der Kerbverzahnung relativ aufwendig, und die Wiederholgenauigkeit ist schwer zu kontrollieren.

Durch die DE-A-14 25 244 wurde eine Flüssigkeitsreibungskupplung mit einer Welle-Nabe-Verbindung bekannt, bei welcher der Rotor auf der Antriebswelle mittels eines Gewindes und eines Zentrierbundes befestigt ist. Bei dieser Verbindung zwischen Antriebswelle und Rotor übernimmt der Zentrierbund, der in eine entsprechende Zentrierbohrung des Rotors eingepaßt ist, die Zentrierung des Rotors gegenüber der Antriebswelle, während das sich an den Zentrierbund anschließende Gewinde die eigentliche Befestigung und Verspannung des Rotors gegenüber der Antriebswelle übernimmt. Diese klassische Welle-Nabe-Verbindung ist mit erhöhten Herstellungskosten verbunden, weil zusätzlich zu der Gewindepaarung eine Paßverbindung mit einer tolerierten Stufenbohrung im Rotor und einem tolerierten Zentrierbund auf der Antriebswelle hergestellt werden müssen. Für eine Massenfertigung ist der mit dieser Herstellung verbundene Kostenaufwand nicht akzeptabel.

Es ist daher Aufgabe der vorliegenden Erfindung, für eine gattungsgemäße Flüssigkeitsreibungskupplung eine technisch einwandfreie Verbindung zwischen Welle und Nabe herzustellen, die einerseits den unterschiedlichen Ausdehnungskoeffizienten von Stahl und Aluminium Rechnung trägt, und die darüber hinaus besonders wirtschaftlich herstellbar ist.

Die Lösung dieser Aufgabe ergibt sich aus den kennzeichnenden Merkmalen des Patentanspruches 1. Danach ist die Welle-Nabe-Verbindung als Gewindeverbindung ausgebildet, d.h. die Antriebsscheibe wird einfach auf die Flanschwelle aufgeschraubt. Dabei sind beide Gewinde bereits vorher in die zu verbindenden Teile eingearbeitet, d.h. der Zapfen der Flanschwelle weist ein Außengewinde und die Nabe der Antriebsscheibe ein Innengewinde auf. Die unterschiedlichen temperaturbedingten Ausdehnungen von Welle und Nabe werden überraschenderweise hervorragend durch das Gewinde kompensiert, welches gleichzeitig auch allein die Zentrierung übernimmt.

Nach einer vorteilhaften Weiterbildung der Erfindung ist die Gewindepaarung als Feingewinde ausgebildet - dadurch ergibt sich einerseits eine besonders gute Rundlaufgenauigkeit bzw. Zentrierung zwischen Flanschwelle und Antriebsscheibe, und andererseits ist es durch das Feingewinde möglich, bei einem vorgegebenen Anzugsmoment eine relativ hohe Anpreßkraft zwischen Nabe und deren Anlagefläche zu erzeugen. In vorteilhafter Weise stützt sich nämlich die Stirnseite der Nabe der Antriebsscheibe gegenüber dem Innenring des Lagers ab, wodurch dieses gegenüber der Flanschwelle axial festgelegt wird. Diese Gewindeverbindung benötigt auch keine zusätzliche Sicherung gegen Lösen, vielmehr wird die Antriebsscheibe lediglich durch ein definiertes Anzugsmoment fest mit der Antriebswelle verspannt, d.h. gegen den Innenring des Lagers und gegen eine entsprechende Schulter der Flanschwelle angezogen. Dabei kann innerhalb der Gewindeverbindung eine plastische, d.h. dauerhafte Verformung, auftreten. Schließlich soll die Steigungsrichtung des Gewindes der Drehrichtung der Flanschwelle, in Fahrtrichtung betrachtet, entsprechen, d.h. bei rechtsdrehender Flanschwelle ist ein Rechtsgewinde vorzusehen. Dadurch wird ebenfalls einem Lösen der Gewindeverbindung entgegengewirkt, weil sich somit die Flanschwelle bzw. deren Gewindezapfen immer wieder in das Gewinde der Antriebsscheibe hineinarbeitet.

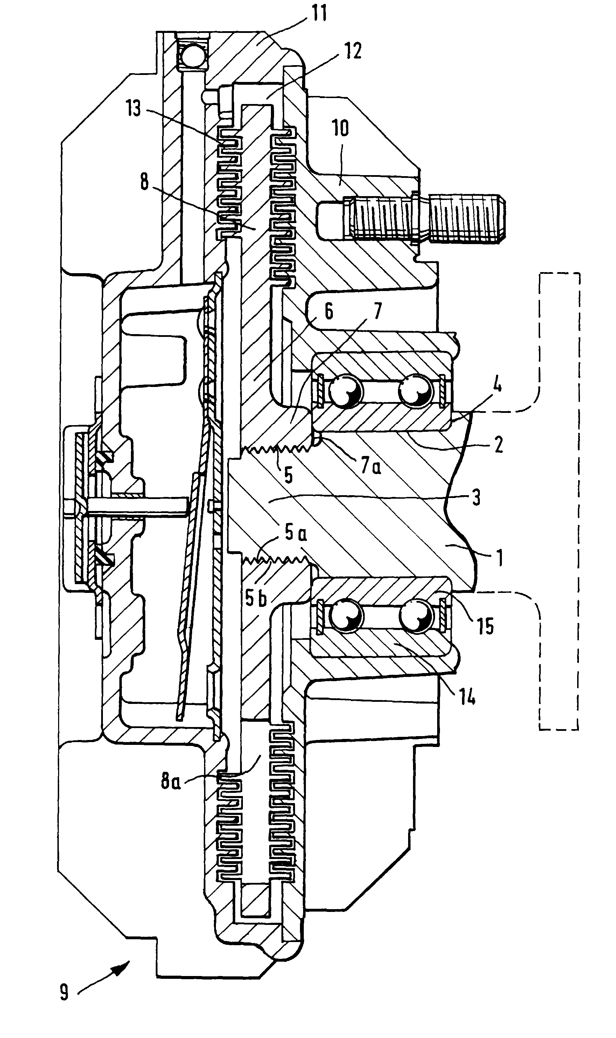

Ein Ausführungsbeispiel ist in der Zeichnung dargestellt und wird im folgenden näher beschrieben.

Die einzige Figur zeigt eine Flüssigkeitsreibungskupplung mit einer Flanschwelle (1), über welche die Kupplung angetrieben wird, und ein Kupplungsgehäuse (9), welches die Abtriebsseite darstellt, an welcher vorzugsweise ein Lüfter für den Kühler einer Brennkraftmaschine befestigt sein kann. Die Flanschwelle (1) ist dabei (in nicht dargestellter Weise) direkt mit der Kurbelwelle der Brennkraftmaschine verbunden. Es ist jedoch auch möglich, daß die Flanschwelle (1) ohne einen Flansch als im Wasserpumpengehäuse gelagerte Antriebswelle ausgebildet ist. Diese Flanschwelle (1) weist einen Lagersitz (2) auf, auf den ein Wälzlager (14) mit seinem Innenring (15) aufgeschoben ist und sich gegen eine Schulter (4) an der Flanschwelle abstützt. Das Wälzlager (15), ein Doppelrillenkugellager, trägt auf seinem Außenring einen Grundkörper (10), welcher mit einem Deckel (11) verbunden ist und mit diesem das Kupplungsgehäuse (9) bildet. Letzteres weist in bekannter Weise eine Arbeitskammer (12) auf, in welcher eine Antriebsscheibe (6) umläuft, welche ihrerseits mit der Flanschwelle (1) verbunden ist. Die Antriebsscheibe (6) bildet in ihrem äußeren Bereich (8) mit dem Kupplungsgehäuse (9) Spalte (13), die in bekannter Weise mit einem viskosen Medium zur Drehmomentübertragung gefüllt werden. Der weitere Aufbau dieser Kupplung wird nicht näher beschrieben, da er insoweit bekannt ist.

In erfindungsgemäßer Weise ist nun die Verbindung zwischen der Flanschwelle (1) und der Antriebsscheibe (6) als Gewinde (5) ausgebildet. Dabei ist die Flanschwelle (1) gegenüber dem Lagersitz (2) abgesetzt und bildet einen Gewindezapfen (3) mit einem Außengewinde (5a). In entsprechender Weise weist die Antriebsscheibe (6) eine Nabe (7) auf, die mit einem Innengewinde (5b) versehen ist, welches auf das Außengewinde (5a) aufgeschraubt wird. Dabei kommt die Stirnseite (7a) der Nabe (7) gegen die Stirnseite des Innenringes (15) zu liegen, welcher sich andererseits gegenüber der Schulter (4) der Flanschwelle (1) abstützt. Die Antriebsscheibe (6) wird zwecks endgültiger Montage mit einem bestimmten Anzugsmoment angezogen, wobei ein entsprechendes Werkzeug in die auf dem Umfang verteilten Schlitze (8a) eingreifen kann. Das Gewinde (5) ist zweckmäßigerweise als Feingewinde, z.B. M 20 x 1 ausgebildet, wodurch sich beim Anziehen der Antriebsscheibe (6) eine besonders hohe Axialkraft ergibt. Beim Anziehen der Antriebsscheibe wird bewußt zugelassen, daß sich in gewissem Rahmen eine plastische Verformung der Verbindung (5) ergibt, so daß damit eine Sicherung der Antriebsscheibe (6) gegen Lösen erreicht wird. Weitere Sicherungen sind damit nicht erforderlich, und es ergibt sich eine außerordentlich einfache und schnelle Montage. Darüber hinaus sind die Gewinde (5a) und (5b) an beiden Teilen wirtschaftlich herstellbar, bspw. auf Automaten. Überraschenderweise ergibt sich auch allein durch diese Gewindeverbindung eine hinreichende Zentrierung der Antriebsscheibe (6) gegenüber der Flanschwelle (1), wobei darauf hinzuweisen ist, daß die Bearbeitung der Antriebsscheibe, insbesondere der Spaltgeometrie (13) bereits vor der Gewindemontage fertiggestellt ist. Nachdem also das Lager (14) mit dem Grundkörper (10) auf den Lagersitz (2) der Flanschwelle (1) aufgeschoben ist, wird die fertig bearbeitete Antriebsscheibe (6) erfindungsgemäß aufgeschraubt und durch Anzugsmoment gesichert, anschließend wird der Deckel (11) auf den Grundkörper (10) aufgesetzt und auf diesen rolliert. Damit ist die Montage der Kupplung abgeschlossen.

## Patentansprüche

1. Flüssigkeitsreibungskupplung mit einer antreibenden Flanschwelle (1) aus Stahl, auf der drehfest mittels einer Welle-Nabe-Verbindung eine Antriebsscheibe (6) aus einer Aluminiumlegierung befestigt ist, die in einer Arbeitskammer (12) eines Kupplungsgehäuses (9) umläuft, welches über ein Wälzlager (14) gegenüber der Flanschwelle (1) gelagert ist, wobei die Antriebsscheibe (6) im Bereich der Arbeitskammer (12) mit dem Kupplungsgehäuse (9) Spalte (13) bildet, die mit einem viskosen Medium zwecks Drehmomentübertragung vollständig oder teilweise füllbar sind, **dadurch gekennzeichnet,** daß die drehfeste Welle-Nabe-Verbindung als Gewindeverbindung (5) ausgebildet ist, bestehend aus einem Außengewinde (5a) auf einem Gewindezapfen (3) der Flanschwelle (1) und einem Innengewinde (5b) in der Nabe (7) der Antriebsscheibe (6), wobei sich das Innengewinde (5b) in der Nabe (7) durchgehend zwischen deren axialen Begrenzungsflächen erstreckt, und daß die Nabe (7) und die Flanschwelle (1) axial gegeneinander verspannt sind.

2. Flüssigkeitsreibungskupplung nach Anspruch 1, **dadurch gekennzeichnet,** daß die Gewindeverbindung (5) ein Feingewinde aufweist.

3. Flüssigkeitsreibungskupplung nach Anspruch 1 oder 2, **dadurch gekennzeichnet,** daß der Durchmesser des Gewindezapfens (3) gegenüber dem Durchmesser des Lagersitzes (2) der Flanschwelle (1) abgesetzt ist und daß die Nabe (7) der Antriebsscheibe (6) gegen den Innenring (15) des Wälzlagers (14) gepreßt ist.

4. Flüssigkeitsreibungskupplung nach Anspruch 1, 2 oder 3, **dadurch gekennzeichnet**, daß die Sicherung gegen Lösen der windeverbindung (5) allein durch ein definiertes Anzugsmoment der Antriebsscheibe (6) gegenüber der Flanschwelle (1, 3) erfolgt.

5. Flüssigkeitsreibungskupplung nach einem der Ansprüche 1 bis 4, **dadurch gekennzeichnet**, daß die Gewindesteigung der Drehrichtung der Flanschwelle (1) , in Fahrtrichtung gesehen, entspricht.

## Claims

1. Fluid friction clutch having a driving flanged shaft (1) of steel on which a drive wheel (6) of an aluminium alloy is fastened in a rotationally secure manner by means of a shaft-hub connection, which drive wheel (6) rotates in a working chamber (12) of a clutch housing (9) which is mounted by means of a roller bearing (14) relative to the flanged shaft (1), the drive wheel (6) forming, with the clutch housing (9), in the region of the working chamber (12), gaps (13) which are completely or partially fillable with a viscous medium for the purpose of torque transmission, characterised in that the rotationally secure shaft-hub connection is in the form of a thread connection (5) comprising an external thread (5a) on a threaded journal (3) of the flanged shaft (1) and an internal thread (5b) in the hub (7) of the drive wheel (6), the internal thread (5b) extending in the hub (7) continuously between the axial delimiting faces thereof, and in that the hub (7) and the flanged shaft (1) are tensioned axially relative to one another.

2. Fluid friction clutch according to claim 1, characterised in that the thread connection (5) has a fine thread.

3. Fluid friction clutch according to claim 1 or 2, characterised in that the diameter of the threaded journal (3) is stepped relative to the diameter of the bearing seat (2) of the flanged shaft (1), and in that the hub (7) of the drive wheel (6) is pressed against the inner ring (15) of the roller bearing (14).

4. Fluid friction clutch according to claim 1, 2 or 3, characterised in that the thread connection (5) is secured against becoming loose purely by a defined tightening torque of the drive wheel (6) relative to the flanged shaft (1,3).

5. Fluid friction clutch according to any one of claims 1 to 4, characterised in that the direction of the thread corresponds to the direction of rotation of the flanged shaft (1), viewed in the direction of travel.

## Revendications

1. Embrayage à frottement visqueux comportant un arbre à bride menant (1) en acier, sur lequel est fixé, sans liberté de rotation relative, au moyen d'une liaison arbre-moyeu, un disque menant (6) en alliage d'aluminium qui tourne dans une chambre de travail (12) d'un carter d'embrayage (9) qui est porté par rapport à l'arbre à bride (1) au moyen d'un roulement (14), le disque menant (6) formant avec le carter d'embrayage (9), dans la zone de la chambre de travail (12), des créneaux (13) que l'on peut remplir complètement ou partiellement d'un fluide visqueux aux fins de transmission du moment de rotation, caractérisé par le fait que la liaison arbre-moyeu, sans liberté de rotation relative, est conçue sous forme d'une liaison par filetage, constituée d'un filetage extérieur (5a) sur un embout fileté (3) de l'arbre à bride (1) et d'un filetage intérieur (5b) dans le moyeu (7) du disque menant (6), le filetage intérieur (5b) prévu dans le moyeu (7) s'étendant en continu entre ses surfaces limites axiales, et que le moyeu (7) et l'arbre à bride (1) sont bridés axialement l'un contre l'autre.

2. Embrayage à friction de fluide selon la revendication 1, caractérisé par le fait que la liaison par filetage (5) présente un filetage fin.

3. Embrayage par friction de fluide selon la revendication 1 ou 2, caractérisé par le fait que le diamètre de l'embout fileté (3) est diminué par rapport au diamètre du siège de roulement (2) de l'arbre à bride (1) et que le moyeu (7) du disque menant (6) est pressé contre la bague intérieure (15) du roulement (14).

4. Embrayage à friction de fluide selon la revendication 1, 2 ou 3, caractérisé par le fait que la sécurité à l'égard d'un desserrage de la liaison par filetage (5) ne résulte que d'un moment de serrage défini du disque menant (6) par rapport à l'arbre à bride (1, 3).

5. Embrayage à friction de fluide selon l'une des revendications 1 à 4, caractérisé par le fait que la pente du filetage corespond au sens de rotation de l'arbre à bride (1), vu dans le sens de la marche.
